# EUROPÄISCHE PATENTSCHRIFT

(11) **EP 2 436 597 B1**
(45) Veröffentlichungstag und Bekanntmachung des Hinweises auf die Patenterteilung: **19.04.2017**
(21) Anmeldenummer: 11007892.0
(22) Anmeldetag: 28.09.2011
(51) Int. Cl.: B64C 13/28, B64C 13/38

(54) **Hochauftriebssystem eines Luftfahrzeuges**
High-lift system for an aircraft
Système de portance élevée d'un aéronef

(30) Priorität: 30.09.2010 DE 102010047154; 23.12.2010 DE 102010055905
(43) Veröffentlichungstag der Anmeldung: 04.04.2012
(73) Patentinhaber: Liebherr-Aerospace Lindenberg GmbH, 88161 Lindenberg/Allgäu (DE)
(72) Erfinder: Kleinhans, Reinhold, Dipl.-Ing. (FH), 88167 Grünenbach (DE); Huth, Stefan, Dipl.-Ing. (FH), 88161 Lindenberg (DE); Weiss, Werner, Dipl.-Ing. (FH), 88175 Scheidegg (DE); Schievelbusch, Bernd, 88161 Lindenberg (DE)
(74) Vertreter: Herrmann, Uwe

(56) Entgegenhaltungen:
- EP-A1- 0 370 653
- EP-A2- 1 604 896
- EP-A2- 2 008 931
- EP-A2- 2 039 605
- EP-A2- 2 154 488
- DE-A1-102008 019 372
- US-A- 4 898 624

## Beschreibung

Die Erfindung betrifft ein Hochauftriebssystem eines Luftfahrzeuges mit wenigstens einer Antriebseinheit, mit wenigstens einer Laststation sowie mit einer oder mehreren Transmissionen zur Übertragung der Antriebsenergie der Antriebseinheit an die wenigstens eine Laststation.

Aus dem Stand der Technik sind Flugzeughochauftriebssysteme bekannt, die eine zentrale Antriebseinheit aufweisen, die mit einem Abzweiggetriebe für die zwei Flügelhälften in Verbindung steht.

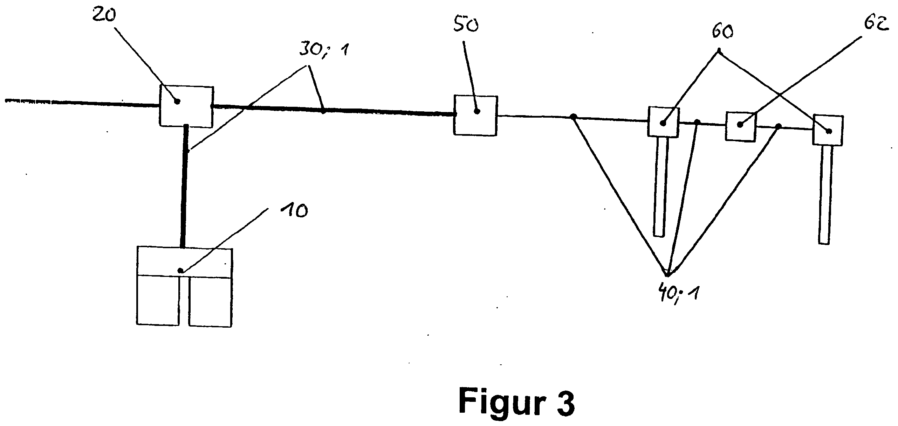

Figur 3 zeigt ein solches bekanntes Hochauftriebssystem in Form der Transmission des rechten Flügels, in dem die erfindungsgemäße Transmission beispielsweise zum Einsatz kommen kann.

Die beispielsweise als Hydromotor oder Gleichstrommotor ausgeführte Antriebseinheit 10 steht über das Abzweiggetriebe 20 mit den Transmissionen beider Flügel in Verbindung. Zwischen der Hochlasttransmission 30 und der Niederlasttransmission 40 des Flügels befindet sich der Systemlastbegrenzer 50, der bei der erfinerfindungsgemäßen Ausführung der Transmissionswellen aus einem titanhaltigen Material auch weggelassen werden kann bzw. nicht zwingend notwendig ist.

Die Bezugszeichen 60 kennzeichnen die Laststationen der Flügelklappen oder dergleichen. Das Bezugszeichen 62 kennzeichnet die Transmissionsbremse.

Findet ein Systemklammer statt, beispielsweise an den Laststationen 60 der Flügelklappen, dann steigt die Last der Transmission des betreffenden Flügels, bis der Systemlastbegrenzer 50 einen weiteren Lastanstieg der Niedriglasttransmission 40 verhindert.

Aus dem Stand der Technik sind des Weiteren Hochauftriebssysteme bekannt, die eine Überlastsicherung mit einem elektrischen Überlastsensor aufweisen, der im Antriebsstrang zwischen der Antriebseinheit und wenigstens einer Laststation angeordnet ist. Dabei kann vorgesehen sein, dass für den Fall, dass es zu einem Systemklemmer kommt, ein Reversierbetrieb der Antriebseinheit eingeleitet wird, wodurch sich die Last in der Transmission rasch verringern lässt.

Es wird insoweit Bezug genommen auf die DE 10 2004 055 740 A1, deren Offenbarungsgehalt hiermit zum Gegenstand der vorliegenden Erfindung gemacht wird.

EP 2 039 605 A2 offenbart ein Hochauftriebssystem.

Der vorliegenden Erfindung liegt die Aufgabe zugrunde, ein Hochauftriebssystem der eingangs genannten Art in vorteilhafter Art und Weise weiterzubilden.

Diese Aufgabe wird durch ein Hochauftriebssystem mit den Merkmalen des Anspruchs 1 gelöst.

Danach ist vorgesehen, dass eine oder mehrere der Transmissionen als Transmissionswelle ausgeführt sind, die aus einem titanhaltigen Material bestehen oder ein titanhaltiges Material aufweisen. Durch die Verwendung eines titanhaltigen Materials lässt sich nicht nur der Vorteil einer gewichtsoptimierten Systemarchitektur erzielen, sondern auch der, dass eine vergleichsweise flache Drehmoment-Drehwinkelkennlinie erhalten werden kann. Die Verwendung eines torsionsweichen Materials bringt den Vorteil mit sich, dass in dem für die Regelung notwendigen Zeitfenster eine entsprechende Gegenregelung aufgebaut werden kann.

Vorzugsweise ist die wenigstens eine Transmissionswelle als Ti-haltige Torsionsfeder ausgeführt.

Vorzugsweise ist vorgesehen, dass das Material in einem großen elastischen Bereich eine vorzugsweise lineare und nicht zu steile Drehmomentkennlinie aufweist, d. h. torsionsweich ausgeführt ist.

Vorteilhafterweise ist des weiteren vorgesehen, dass das Material ausreichende Festigkeitseigenschaften (vorzugsweise Rm > 1000 Mpa) aufweist. Bekannte Lösungen mit der Zielsetzung niedriges Gewicht sind Transmissionswellen aus Aluminium und CFK. Diese haben jedoch den Nachteil, dass sie entweder nicht ausreichend torsionsweich sind und/oder nicht die ausreichende Biegesteifigkeit aufweisen.

In bevorzugter Ausgestaltung der vorliegenden Erfindung ist des Weiteren vorgesehen, dass das Material zusätzlich oder alternativ zu dem Merkmal der oben genannten Zugfestigkeit, die zu einem größeren Arbeitsbereich führt, die Eigenschaft aufweist, dass die Bruchdehnung > 8 % beträgt. Die Bruchdehnung ist ein Kennzeichen für die Verformungsfähigkeit des Materials und entspricht dem Quotienten aus Längenänderung des Zugstabes zur Ausgangslänge. Vorzugsweise handelt es sich bei den vorgenannten Eigenschaften um mechanische Eigenschaften des Materials bei Raumtemperatur.

Weiterhin kann vorgesehen sein, dass das Material der Transmissionswelle ein Elastizitätsmodul bei Raumtemperatur im Bereich zwischen 100 GPa und 120 GPa, und vorzugsweise von 110 GPa aufweist. Das Schubmodul, das mit dem Elastizitätsmodul E und der Querkontraktionszahl ν (Poissonzahl) über die Beziehung G = E/(2+2 v) in Beziehung steht, bewegt sich bei dem erfindungsgemäßen Material vorzugsweise im Bereich von 39 GPa bis 42 GPa, bevorzugt bei einem Wert von ca. 40 GPa. Setzt man für ν den Wert 0,36 für Titan ein, ergibt sich der besonders bevorzugte Wert von G in Höhe von 40,44 GPa.

Auch die genannten Werte für das Elastizitätsmodul und das Schubmodul beziehen sich vorzugsweise auf die Werte bei Raumtemperatur.

In bevorzugter Ausgestaltung der Erfindung ist vorgesehen, dass es sich bei dem Material um eine titanhaltige Legierung handelt. Denkbar ist der Einsatz einer α-β Titanlegierung. Diese ist hinsichtlich des Wärmebehandlungszustandes vorzugsweise geglüht, kaltgezogen und entspannt.

Besonders vorteilhaft ist es, wenn das Material Titan als Hauptbestandteil enthält.

Das Material kann außer Titan weitere Bestandteile aufweisen, insbesondere Aluminium und/oder Vanadium. Dabei ist vorzugsweise vorgesehen, dass der Aluminiumanteil größer ist als der Anteil des Vanadiums in der Legierung.

Neben Titan, Aluminium und Vanadium können auch weitere Bestandteile vorhanden sein, wie beispielsweise Eisen, Yttrium etc.

Vorzugsweise ist vorgesehen, dass das Aluminium in einem Bereich von 4,5 Gew.-% bis 7,5 Gew.-% und vorzugsweise in einem Bereich von 5,5 Gew.-% bis 6,5 Gew.-% vorliegt.

Der Vanadiumanteil liegt vorzugsweise in einem Bereich von beispielsweise 2,5 Gew.-% bis 5,5 Gew.-% und vorzugsweise in einem Bereich von 3,5 Gew.-% bis 4,5 Gew.-%.

Als besonders vorteilhaft hat sich die Verwendung des Materials Ti 6Al 4V erwiesen.

In weiterer Ausgestaltung der Erfindung ist vorgesehen, dass die Transmissionswelle mit einem oder mehreren Anschlusselementen in Verbindung steht, wobei vorzugsweise vorgesehen ist, dass das oder die Anschlußelemente aus einem titanhaltigen Material bestehen oder ein solches Material aufweisen.

Die Verbindung zwischen den Anschlusselementen und der Transmissionswelle kann vorzugsweise durch ein Schweißverfahren hergestellt werden.

Vorzugsweise kommt ein homogenes, geschweißtes Bauteil zur Anwendung, umfassend eine Transmissionswelle bestehend aus einem Rohr mit der genannten hochfesten, gut schweißbaren Titanlegierung in Verbindung mit verschiedenartigen leichten und hochfesten Titan-Anschlusselementen.

Bei diesen Anschlusselementen kann es sich beispielsweise um Gabeln für integrierte Kadarngelenke oder Flansche für lösbare Verbindungen sowie integrierte Verzahnungselemente handeln.

Das oder die Anschlusselemente können aus demselben Material bestehen wie die eigentliche Transmissionswelle.

Die Verbindung zwischen dem oder den Anschlusselementen und dem Rohr der Welle kann beispielsweise durch das WIG-Orbitalschweißen ohne Zusatzwerkstoff für die Verbindung Welle-Anschlusselement mit spezieller Schweißnahtvorbereitung erfolgen.

In weiterer Ausgestaltung der Erfindung ist vorgesehen, dass das Hochauftriebssystem Mittel zur Lastmessung (Kraft oder Drehmoment) insbesondere Mittel zur elektrischen Lastmessung aufweist. Denkbar ist es, dass das Hochauftriebssystem eine Überlastsicherung aufweist, die wenigstens einen elektrischen Überlastsensor aufweist, der an geeigneter Stelle im Antriebsstrang zwischen der Antriebseinheit und wenigstens einer Laststationen angeordnet ist.

Denkbar ist es, dass ein Regel- oder Steuerelement vorgesehen ist, das mit den Mitteln zur Lastmessung sowie mit der Antriebseinheit in Verbindung steht und das Mittel aufweist, durch die bei Aufnahme einer den Grenzwert übersteigenden Last ein elektrisches Signal an die Antriebseinheit abgegeben wird. Denkbar ist es, dass dieses Signal zu einem Stoppen bzw. zu einem Abbremsen der Antriebseinheit führt. Besonders vorteilhaft ist es, wenn das Signal zu einem Reversierbetrieb der Antriebseinheit führt, so dass die Antriebsenergie sehr schnell reduziert wird.

Die Verwendung der erfindungsgemäßen Wellen ist jedoch nicht auf ein solches System beschränkt.

Die Wellen können ebenso bei Hochauftriebssystemen eingesetzt werden, die beispielsweise einen herkömmlichen Systemlastbegrenzer aufweisen. Aufgrund der torsionsweichen Ausführung der Welle können insgesamt Lastspitzen vermieden werden, wodurch insgesamt eine leichter bauende und kostengünstige Systemausführung möglich ist. Denkbar ist die Verwendung für ungeregelte Systeme mit der Erhöhung des Anteils elastischer Komponenten der Transmissionswelle.

Unter diesen herkömmlichen Systemlastbegrenzern können ungeregelte Systeme zu verstehen sein. Vorzugsweise handelt es sich bei dem herkömmlichen Systemlastbegrenzer um ein Bauteil, das eine Überlast in die Flugzeugstruktur ableitet und auf diese Weise die Niedriglasttransmission schützt. Denkbar ist beispielsweise der Einsatz von mechanisch arbeitenden Systemlastbegrenzern. Herkömmlich ist ein federvorgespannter Kugelrampenmechanismus, der im Falle einer Überlast einen weiteren Mechanismus betätigt, der die Überlast in die Flugzeugstruktur ableitet und auf diese Weise die Niedriglasttransmission schützt.

Die vorliegende Erfindung betrifft des Weiteren die Verwendung einer erfindungsgemäßen Transmission bzw. Transmissionswelle für ein Hochauftriebssystem eines Luftfahrzeuges.

Die Erfindung betrifft schließlich ein Verfahren zur Herstellung wenigstens einer Transmissionswelle, vorzugsweise einer Transmissionswelle eines Hochauftriebssystems gemäß einem der Ansprüche 1 bis 12, das dadurch gekennzeichnet ist, dass die Transmissionswelle durch das Verfahren des Pilgerns, auch als Pilgerschrittverfahren bezeichnet, hergestellt wird. Durch dieses Verfahren lassen sich besonders vorteilhaft die positiven mechanischen Eigenschaften des Materials erzielen.

Die vorliegende Erfindung betrifft des Weiteren ein Luftfahrzeug mit wenigstens einem Hochauftriebssystem gemäß einem der Ansprüche 1 bis 12.

Weitere Einzelheiten und Vorteile der Erfindung werden anhand eines in der Zeichnung dargestellten Ausführungsbeispiels näher erläutert. Es zeigen:
- Figur 1:: eine Schnittansicht durch eine erfindungsgemäße Transmissionswelle mit angeschweißten Anschlusselementen,
- Figur 2:: eine Draufsicht auf die Transmissionswelle gemäß Figur 1 mit einem integrierten Kardangelenk und
- Figur 3:: eine schematische Ansicht eines Flugzeughochauftriebssystems gemäß dem Stand der Technik.

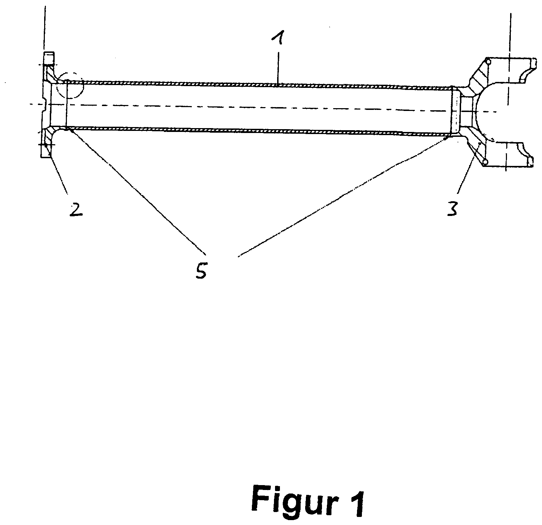

Figur 1 zeigt mit dem Bezugszeichen 1 eine Transmissionswelle, die aus dem Werkstoff Ti 6Al 4V besteht. In der nachfolgenden Tabelle ist exemplarisch angegeben, welche Zusammensetzung die für die Transmissionswelle verwendete Titanlegierung aufweist.

| Element (Elements) | Massenanteil in % (Percentage by mass) | |
|---|---|---|
| | Von (from) | Bis (to) |
| Aluminium (Al) | 5,50 | 6,50 |
| Vanadium (V) | 3.50 | 4,50 |
| Iron (Fe) | --- | 0,25 |
| Oxygen(O) | --- | 0,15 |
| Nitrogen (N) | --- | 0,05 |
| Carbon (C) | --- | 0,08 |
| Hydrogen (H) | --- | 0,0125 |
| Yttrium (Y) | --- | 0,005 |
| Andare, sonstige (others, each) | --- | 0,1 |
| Andare, gesamt (others, total) | --- | 0,3 |
| Ti | Rest (Remainder) | |

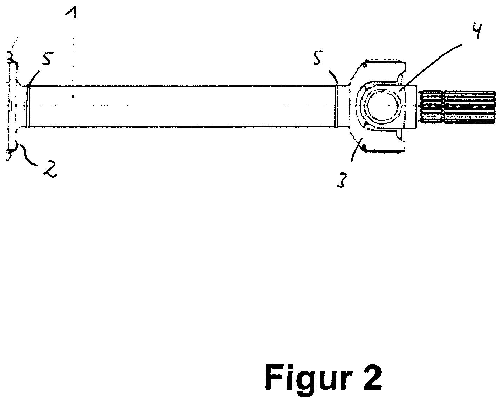

Wie dies weiter aus Figur 1 hervorgeht, ist die Welle 1 mit zwei Anschlusselementen 2, 3 versehen, wobei es sich bei dem Anschlusselement 2 um einen Flansch für eine lösbare Verbindung und bei dem Element 3 für eine Gabel für ein integriertes Kardangelenk 4 handelt, das in der Ansicht gemäß Figur 2 dargestellt ist.

Bei den dargestellten Anschlusselementen 2, 3 handelt es sich selbstverständlich nur um Beispiele. Auch andere Elementen können je nach Bedarf verwendet werden.

Vorzugsweise sind auch die Anschlusselemente 2, 3 titanhaltig. Denkbar ist es, diese aus demselben Material herzustellen, wie die eigentliche Transmissionswelle 1. Die Anschlusselemente 2, 3 sind mit dem Rohr 1 an den Stellen 5 verschweißt.

Insgesamt ergibt sich gemäß Figur 1 ein homogenes, geschweißtes Bauteil in Form der Transmissionswelle 1, die aus der genannten Titanlegierung besteht und die in dem dargestellten Ausführungsbeispiel jeweils endseitig mit einem leichten und hochfesten Titananschlusselement 2, 3 versehen ist.

Ein Vorteil der vorliegenden Erfindung besteht darin, dass die Transmissionswelle keinen Oberflächenschutz benötigt und dass die Anschlusselemente 2, 3 derart konstruktiv ausgeführt werden, dass kein Schweißzusatzwerkstoff benötigt wird.

Dies vereinfacht die Verbindung der Transmissionswelle 10 mit den Anschlusselementen 2, 3 entsprechend.

Denkbar ist es, die Verbindung zwischen Rohr bzw. Transmissionswelle 10 und den Anschlusselementen 2., 3 durch Schweißen und vorzugsweise durch WIG-Orbitalschweißen (Elektrode dreht sich) durchzuführen. Wie ausgeführt, besteht eine vorteilhafte Ausgestaltung darin, dass ohne Zusatzwerkstoff geschweißt wird.

Die Transmissionswelle 1 weist den Vorteil auf, dass sie in einem großen elastischen Bereich eine lineare und vergleichsweise flache Drehmomentkennlinie aufweist, d. h. torsionsweich ausgeführt ist.

Insbesondere für die oben beschriebene Regelung, die zu einem Reversierbetrieb der Antriebseinheit führen kann, um das Drehmoment so schnell wie möglich zu reduzieren, ist eine solche Ausgestaltung vorteilhaft, da durch die torsionsweiche Ausführung der Welle ein hinreichend großes Zeitfenster geschaffen wird, um die entsprechende Gegenregelung bzw. den Reversierbetrieb der Antriebseinheit aufbauen zu können.

Wie ebenfalls oben ausgeführt, ist die Transmissionswelle jedoch nicht auf einen solchen Einsatz beschränkt, sondern kann beispielsweise auch in Systemen zum Einsatz kommen, wie sie beispielsweise in Figur 3 dargestellt sind, d. h. in herkömmlichen Hochauftriebssystemen, die beispielsweise einen herkömmlichen Systemlastbegrenzer aufweisen. In diesem Fall führt die Verwendung des torsionsweichen Rohres zu der Vermeidung von Lastspitzen und ermöglicht somit insgesamt eine leichter bauende Ausführung des gesamten lastoptimierten Highliftsystems.

Die in Figur 1 und 2 dargestellten Anordnungen können sich in dem gesamten Abschnitt, d. h. von der Antriebseinheit 10 bis zu den Laststationen 60 erstrecken. Das heißt die erfindungsgemäßen Transmissionswellen können in der Hochlasttransmission 30 und/oder in der Niedriglasttransmission 40 verwendet werden. Vorzugsweise besteht das System durchgehend, d. h. von der Antriebseinheit 10 bis hin zu den Laststationen 60 aus einer oder mehreren erfindungsgemäßen Transmissionswellen.

Denkbar und von der Erfindung mitumfasst ist es jedoch auch, dass nur ein Teilabschnitt der gesamten Transmission von der Antriebseinheit zu der oder den Laststationen 60 oder die gesamte Transmission durch die erfindungsgemäße Transmissionswelle gebildet wird. So ist es beispielsweise denkbar, den Antriebsstrang von der Antriebseinheit 10 bis zum Abzweiggetriebe 20 oder bis zum Systemlastbegrenzer 50 oder bis zu den Laststationen 62 oder den Abschnitt zwischen den Abzweiggetriebe 20 und dem Systemlastbegrenzer 50 und/oder den Abschnitt zwischen Systemlastbegrenzer 50 und den Laststationen mit den erfindungsgemäßen Transmissionen auszuführen.

Die Laststationen 60 dienen vorzugsweise zum Bewegen der Flügelklappen bzw. von Landeklappen-/Vorflügelklappensystemen.

Durch die erfindungsgemäße Transmissionswelle lassen sich in bevorzugter Ausgestaltung der Erfindung folgende optimierte Eigenschaften erzielen:
a) flache Torsion/Feder-Kennlinie durch eine spezielle erfindungsgemäße Legierung,
b) eine hohe Belastbarkeit sowie eine Zugfestigkeit Rₘ von > 1000 MPa, die insbesondere durch den Herstellprozess des Pilgerns erreicht wird und
c) eine vergleichsweise leicht bauende Systemausführung aufgrund der torsionsweichen Ausführung der Welle, mit der Lastspitzen vermieden werden können.

## Patentansprüche

1. Hochauftriebssystem eines Luftfahrzeuges mit wenigstens einer Antriebseinheit, mit wenigstens einer Laststation sowie mit einer oder mehreren Transmissionen zur Übertragung der Antriebsenergie der Antriebseinheit an die wenigstens eine Laststation, **dadurch gekennzeichnet, dass** eine oder mehrere der Transmissionen als Transmissionswelle (1) ausgeführt sind, die aus einem titanhaltigen Material bestehen oder ein titanhaltiges Material aufweisen, wobei das Material ein Elastizitätsmodul im Bereich von 100 bis 120 GPa und/oder ein Schubmodul im Bereich von 39 GPa bis 42 GPa aufweist, wobei die Transmissionswelle (1) mit zwei Anschlusselementen (2, 3) in Verbindung steht, und wobei bei einem Anschlusselement (2) es sich um Flansche für lösbare Verbindungen handelt und bei einem anderen Anschlusselement (3) es sich um Außenverzahnung handelt.

2. Hochauftriebssystem nach Anspruch 1, **dadurch gekennzeichnet, dass** der Antriebsstrang von der Antriebseinheit bis hin zu der oder den Laststationen durchgehend oder nur abschnittsweise mit den genannten Transmissionswellen (1) ausgeführt ist.

3. Hochauftriebssystem nach Anspruch 1 oder 2, **dadurch gekennzeichnet, dass** es sich bei dem Material um eine titanhaltige Legierung handelt.

4. Hochauftriebssystem nach einem der vorhergehenden Ansprüche, **dadurch gekennzeichnet, dass** das Material Titan als Hauptbestandteil enthält.

5. Hochauftriebssystem nach einem der vorhergehenden Ansprüche, **dadurch gekennzeichnet, dass** das Material außer Titan die als weitere Bestandteile ausschließlich oder unter anderem Aluminium und/oder Vanadium aufweist, wobei vorzugsweise vorgesehen ist, dass sowohl Aluminium als auch Vanadium vorhanden sind und Aluminium in einem größeren Massenanteil vorliegt als Vanadium.

6. Hochauftriebssystem nach Anspruch 5, **dadurch gekennzeichnet, dass** Aluminium in einem Bereich von 4,5 Gew.-% bis 7,5 Gew.-% und vorzugsweise in einem Bereich von 5,5 Gew.-% bis 6,5 Gew.-% vorliegt.

7. Hochauftriebssystem nach Anspruch 5 oder 6, **dadurch gekennzeichnet, dass** Vanadium in einem Bereich von 2,5 Gew.-% bis 5,5 Gew.-% und vorzugsweise in einem Bereich von 3,5 Gew.-% bis 4,5 Gew.-% vorliegt.

8. Hochauftriebssystem nach einem der vorhergehenden Ansprüche, **dadurch gekennzeichnet, dass** es bei dem Material um die Legierung Ti 6Al 4V handelt.

9. Hochauftriebssystem nach einem der vorhergehenden Ansprüche, **dadurch gekennzeichnet, dass** die Transmissionswelle (1) mit einem oder mehreren Anschlusselementen (2, 3) in Verbindung steht, wobei vorzugsweise vorgesehen ist, dass das oder die Anschlusselemente (2, 3) aus einem titanhaltigen Material bestehen oder ein solches Material aufweisen.

10. Hochauftriebssystem nach einem der vorhergehenden Ansprüche, **dadurch gekennzeichnet, dass** das Hochauftriebssystem Mittel zur Lastmessung und/oder eine Überlastsicherung, insbesondere Mittel zur elektrischen Lastmessung bzw. eine Überlastsicherung mit einem elektrischen Überlastsensor aufweist und/oder **dadurch gekennzeichnet, dass** das Hochauftriebssystem wenigstens einen herkömmlichen Systemlastbegrenzer aufweist.

11. Hochauftriebssystem nach Anspruch 10, **dadurch gekennzeichnet, dass** ein Regler oder ein Steuerelement vorgesehen ist, der mit dem Mitteln zur Lastmessung bzw. der Überlastsicherung sowie mit der Antriebseinheit in Verbindung steht und der Mittel aufweist, durch die bei Aufnahme einer einen Grenzwert übersteigenden Last ein elektrisches Signal an die Antriebseinheit abgegeben wird.

12. Hochauftriebssystem nach einem der vorhergehenden Ansprüche, **dadurch gekennzeichnet, dass** das Material eine Zugfestigkeit Rₘ von > 1000 N/qmm und/oder eine Bruchdehnung von 8 % aufweist.

13. Verwendung einer oder mehrerer Transmissionswellen gemäß dem kennzeichnenden Teil der Ansprüche 1 bis 12 für ein Hochauftriebssystem eines Luftfahrzeuges.

14. Luftfahrzeug, **dadurch gekennzeichnet, dass** das Luftfahrzeug wenigstens ein Hochauftriebssystem nach einem der Ansprüche 1 bis 12 aufweist.

15. Verfahren zur Herstellung einer Transmissionswelle (1) eines Hochauftriebssystems gemäß einem der Ansprüche 1 bis 12, **dadurch gekennzeichnet, dass** das Verfahren den Schritt des Pilgerns umfasst.

## Claims

1. A high-lift system of an aircraft having at least one drive unit, having at least one load station as well as having one or more transmissions for transmitting the drive energy of the drive unit to the at least one load station, **characterized in that** one or more of the transmissions are made as transmission shafts (1) which consist of a material containing titanium or comprise a material containing titanium, wherein the material has a Young's modulus in the range of 100 to 120 GPa and/or a shear modulus in the range from 39 GPa to 42 GPa, wherein the transmission shaft (1) is in communication with two connector elements (2, 3), and wherein one connector element (2) consists of flanges for a releasable connection and the other connector element (3) consists of external teeth.

2. A high-lift system in accordance with claim 1, **characterized in that** the drive train from the drive unit up to the load station or stations is designed as throughgoing or only sectionally with the named transmission shafts (1).

3. A high-lift system in accordance with claim 1 or claim 2, **characterized in that** the material is an alloy containing titanium.

4. A high-lift system in accordance with one of the preceding claims, **characterized in that** the material contains titanium as a main component.

5. A high-lift system in accordance with one of the preceding claims, **characterized in that** the material comprises, in addition to titanium, only or inter alia aluminum and/or vanadium as further components, with provision preferably being made that both aluminum and vanadium are present and aluminum is present in a larger mass portion than vanadium.

6. A high-lift system in accordance with claim 5, **characterized in that** aluminum is present in a range from 4.5% by weight to 7.5% by weight and preferably in a range from 5.5% by weight to 6.5% by weight.

7. A high-lift system in accordance with claim 5 or claim 6, **characterized in that** vanadium is present in a range from 2.5% by weight to 5.5% by weight and preferably in a range from 3.5% by weight to 4.5% by weight.

8. A high-lift system in accordance with one of the preceding claims, **characterized in that** the material is the alloy Ti 6Al 4V.

9. A high-lift system in accordance with one of the preceding claims, **characterized in that** the transmission shaft (1) is in communication with one or more connector elements (2, 3), with provision preferably being made that the connector element or element(s) (2, 3) consist of a material containing titanium or comprise such a material.

10. A high-lift system in accordance with one of the preceding claims, **characterized in that** the high-lift system has means for load measurement and/or a security against overload, in particular means for elastic load measurement or a security against overload having an electric overload sensor; and/or **characterized in that** the high-lift system has at least one conventional system load limiter.

11. A high-lift system in accordance with claim 10, **characterized in that** a regulator or a control element is provided which is in communication with the means for load measurement or the security against overload as well as with the drive unit and which has means by which an electric signal is output to the drive unit on taking up a load exceeding a limit value.

12. A high-lift system in accordance with one of the preceding claims, **characterized in that** the material has a tensile strength Rₘ of > 1000 N/qmm and/or an elongation at break of > 8%.

13. Use of one or more transmission shafts in accordance with the characterizing portion of claims 1 to 12 for a high-lift system of an aircraft.

14. An aircraft, **characterized in that** the aircraft has at least one high-lift system in accordance with one of the claims 1 to 12.

15. A method of manufacturing a transmission shaft (1) of a high-lift system in accordance with one of the claims 1 to 12, **characterized in that** the method includes a pilger step.

## Revendications

1. Système de portance élevée d'un aéronef comprenant au moins une unité d'entraînement, dotée d'au moins un poste de charge ainsi que d'une ou de plusieurs transmissions pour le transfert de l'énergie d'entraînement de l'unité d'entraînement à l'au moins un poste de charge, **caractérisé en ce qu'**une ou plusieurs des transmissions sont réalisées en tant qu'arbres de transmission (1), qui se composent d'un matériau contenant du titane ou qui comportent un matériau contenant du titane, le matériau présentant un module d'élasticité compris entre 100 et 120 GPa et/ou un module de cisaillement compris entre 39 GPa et 42 GPa, l'arbre de transmission (1) étant en liaison avec deux éléments de raccordement (2, 3), et un élément de raccordement (2) étant des brides pour des liaisons amovibles et l'autre élément de raccordement (3) étant une denture extérieure.

2. Système de portance élevée selon la revendication 1, **caractérisé en ce que** la chaîne cinématique de l'unité d'entraînement au ou aux postes de charge est réalisée sans interruption ou uniquement sur certaines parties par lesdits arbres de transmission (1).

3. Système de portance élevée selon la revendication 1 ou 2, **caractérisé en ce que** le matériau est un alliage contenant du titane.

4. Système de portance élevée selon l'une des revendications précédentes, **caractérisé en ce que** le matériau contient du titane comme constituant principal.

5. Système de portance élevée selon l'une des revendications précédentes, **caractérisé en ce que** le matériau comporte, en plus du titane, exclusivement ou entre autres de l'aluminium et/ou du vanadium comme autres constituants, dans lequel il est de préférence prévu qu'il y ait aussi bien de l'aluminium que du vanadium et que l'aluminium se présente dans une fraction massique supérieure au vanadium.

6. Système de portance élevée selon la revendication 5, **caractérisé en ce que** la teneur en aluminium est comprise entre 4,5 % en poids et 7,5 % en poids et de préférence entre 5,5 % en poids et 6,5 % en poids.

7. Système de portance élevée selon la revendication 5 ou 6, **caractérisé en ce que** la teneur en vanadium est comprise entre 2,5 % en poids et 5,5 % en poids et de préférence entre 3,5 % en poids et 4,5 % en poids.

8. Système de portance élevée selon l'une des revendications précédentes, **caractérisé en ce que** le matériau est de l'alliage Ti-6Al-4V.

9. Système de portance élevée selon l'une des revendications précédentes, **caractérisé en ce que** l'arbre de transmission (1) est en liaison avec un ou plusieurs éléments de raccordement (2, 3), dans lequel il est de préférence prévu que le ou les éléments de raccordement (2, 3) se composent d'un matériau contenant du titane ou comportent un tel matériau.

10. Système de portance élevée selon l'une des revendications précédentes, **caractérisé en ce que** le système de portance élevée comporte des moyens de mesure de la charge et/ou un dispositif de sûreté contre la surcharge, en particulier des moyens de mesure électrique de la charge ou un dispositif de sûreté contre la surcharge doté d'un capteur de surcharge électrique et/ou **caractérisé en ce que** le système de portance élevée comporte au moins un limiteur de charge de système conventionnel.

11. Système de portance élevée selon la revendication 10, **caractérisé en ce qu'**un régulateur ou un élément de commande est prévu, qui est en liaison avec les moyens de mesure de la charge et/ou le dispositif de sûreté contre la surcharge ainsi qu'avec l'unité d'entraînement et qui comporte des moyens permettant de transmettre un signal électrique à l'unité d'entraînement en cas d'enregistrement d'une charge dépassant une valeur limite.

12. Système de portance élevée selon l'une des revendications précédentes, **caractérisé en ce que** le matériau présente une résistance à la traction Rₘ de > 1000 N/mm² et/ou un allongement à la rupture de > 8 %.

13. Utilisation d'un ou de plusieurs arbres de transmission selon la partie caractérisante des revendications 1 à 12 pour un système de portance élevée d'un aéronef.

14. Aéronef, **caractérisé en ce que** l'aéronef comporte au moins un système de portance élevée selon l'une des revendications 1 à 12.

15. Procédé de fabrication d'un arbre de transmission d'un système de portance élevée selon l'une des revendications 1 à 12, **caractérisé en ce que** le procédé comprend l'étape de laminage à pas de pèlerin.
